# EUROPÄISCHE PATENTANMELDUNG

(11) **EP 3 974 306 A1**
(43) Veröffentlichungstag der Anmeldung: **30.03.2022**
(21) Anmeldenummer: 21194736.1
(22) Anmeldetag: 03.09.2021
(51) Int. Cl.: B62K 19/16, B62K 19/36, B62K 19/46, B62J 43/13, B62K 19/34, B62J 43/28

(54) **ELEKTROFAHRRAD**

(30) Priorität: 25.09.2020 AT 5018820 U
(71) Anmelder: Ohrnberger, Gerd, 4853 Steinbach am Attersee (AT)
(72) Erfinder: Ohrnberger, Gerd, 4853 Steinbach am Attersee (AT)
(74) Vertreter: KLIMENT & HENHAPEL

(57) **Zusammenfassung**

Elektrofahrrad (1) mit einem Rahmen (2) aus einem kohlenstofffaserverstärktem Werkstoff, insbesondere kohlenstofffaserverstärktem Kunststoff, wobei der Rahmen (2) zumindest zwei, vorzugsweise genau zwei, miteinander verbundene Schalenelemente (3) umfasst, die sich entlang einer Längsachse (4) des Elektrofahrrads (1) erstrecken und zumindest abschnittsweise zu beiden Seiten der Längsachse (4) einander gegenüberliegend angeordnet sind, wobei Einbauteile (5, 6, 7, 8) zumindest abschnittsweise zwischen den Schalenelementen (3) angeordnet und mit diesen verbunden sind und wobei die Einbauteile mindestens eine Sattelstützenaufnahme (5) und eine Tretlageraufnahme (6) umfassen. Erfindungsgemäß ist vorgesehen, dass die mindestens eine Sattelstützenaufnahme (5) und die Tretlageraufnahme (6) gemeinsam als Schweißbaugruppe ausgebildet sind.

## Beschreibung

### GEBIET DER ERFINDUNG

Die vorliegende Erfindung betrifft ein Elektrofahrrad mit einem Rahmen aus einem kohlenstofffaserverstärktem Werkstoff, insbesondere kohlenstofffaserverstärktem Kunststoff, wobei der Rahmen zumindest zwei, vorzugsweise genau zwei, miteinander verbundene Schalenelemente umfasst, die sich entlang einer Längsachse des Elektrofahrrads erstrecken und zumindest abschnittsweise zu beiden Seiten der Längsachse einander gegenüberliegend angeordnet sind, wobei Einbauteile zumindest abschnittsweise zwischen den Schalenelementen angeordnet und mit diesen verbunden sind und wobei die Einbauteile mindestens eine Sattelstützenaufnahme und eine Tretlageraufnahme umfassen.

### STAND DER TECHNIK

Elektrofahrräder, auch als E-Bikes oder Pedelecs bezeichnet, erfreuen sich zunehmender Beliebtheit. Aufgrund der Antriebskomponenten und Batterien bzw. Akkus fallen diese jedoch mitunter relativ schwer aus, was als nachteilig zu werten ist, speziell wenn die Batterieleistung erschöpft ist und man das Fahrzeug nur mit Muskelkraft bewegen muss.

Weiters stellt die stabile, aerodynamisch vorteilhafte und optisch ansprechende Befestigung von Batterie und Antriebskomponenten an einem konventionellen Fahrradrahmen in Diamantbauweise eine gewisse Herausforderung dar.

Schließlich müssen, so wie bei gewöhnlichen Fahrrädern, auch bei Elektrofahrrädern Rahmen mit unterschiedlichen Größen produziert bzw. verwendet werden, um eine hinreichende Anpassung an die Körpergröße des jeweiligen Benutzers gewährleisten zu können.

Aus der DE 102014107852 A1 ist ein Pedelec-Rahmen aus zwei Halbschalen aus einem faserverstärkten thermoplastischen Kunststoff bekannt, wobei angespritzte Aufnahmen vorgesehen sind, in denen Aufnahmehülsen z.B. für das Tretlager oder den Fahrersattel angeordnet werden können. Wie diese Aufnahmehülsen mechanisch stabil befestigt werden können, bleibt jedoch offen. Insbesondere im Hinblick auf eine dauerhaft mechanisch stabile Ausführung besteht daher erheblicher Verbesserungsbedarf.

### AUFGABE DER ERFINDUNG

Es ist Aufgabe der vorliegenden Erfindung, ein Elektrofahrrad zur Verfügung zu stellen, das die oben genannten Nachteile überwindet.

### DARSTELLUNG DER ERFINDUNG

Zur Lösung der genannten Aufgabe ist bei einem Elektrofahrrad mit einem Rahmen aus einem kohlenstofffaserverstärktem Werkstoff, insbesondere kohlenstofffaserverstärktem Kunststoff, wobei der Rahmen zumindest zwei, vorzugsweise genau zwei, miteinander verbundene Schalenelemente umfasst, die sich entlang einer Längsachse des Elektrofahrrads erstrecken und zumindest abschnittsweise zu beiden Seiten der Längsachse einander gegenüberliegend angeordnet sind, wobei Einbauteile zumindest abschnittsweise zwischen den Schalenelementen angeordnet und mit diesen verbunden sind und wobei die Einbauteile mindestens eine Sattelstützenaufnahme und eine Tretlageraufnahme umfassen, erfindungsgemäß vorgesehen, dass die mindestens eine Sattelstützenaufnahme und die Tretlageraufnahme gemeinsam als Schweißbaugruppe ausgebildet sind.

Hier und im Folgenden ist "verbunden" im Gegensatz zu "lösbar verbunden" so zu verstehen, dass die entsprechende Verbindung als fix anzusehen ist, d.h. dass es grundsätzlich nicht vorgesehen ist, die entsprechende Verbindung zu lösen. Entsprechend sind z.B. die Einbauteile fix bzw. fest mit dem Rahmen verbunden.

Kohlenstofffaserverstärkte Werkstoffe sind an sich bekannt und weisen hervorragende Materialeigenschaften auf, insbesondere eine hohe Festigkeit bei geringer Dichte. Entsprechend leicht - wesentlich leichter als konventionelle Lösungen aus Stahl - und gleichzeitig stabil kann auch das erfindungsgemäße Elektrofahrrad gebaut werden. Typischerweise kann durch die Verwendung des kohlenstofffaserverstärkten Werkstoffs gegenüber einer Lösung mit einem vergleichbaren Rahmen aus einem Metall, insbesondere aus einem Stahl, zumindest 7 kg, bevorzugt zumindest 9 kg, besonders bevorzugt zumindest 11 kg, an Masse eingespart werden.

Neben kohlenstofffaserverstärktem Kunststoff (u.a. auch als CFK oder CFRP bezeichnet) kommen als kohlenstofffaserverstärkte Werkstoffe prinzipiell auch kohlenstofffaserverstärkte Keramiken oder kohlenstofffaserverstärkter Kohlenstoff in Frage.

Der Aufbau des Rahmens aus Schalenelementen, die sich zu beiden Seiten der Längsachse des Rahmens bzw. Elektrofahrrads erstrecken, erlaubt die problemlose, zumindest abschnittsweise Unterbringung einzelner Komponenten, insbesondere der Einbauteile, des Elektrofahrrads zwischen den Schalenelementen.

Wie der Begriff Schalenelement impliziert, sind die Schalenelemente flächig ausgeführt und ergeben einen Rahmen in der Art eines Monocoques. Entsprechend werden die Einbauteile durch die Schalenelemente gegen äußere Einflüsse gut geschützt. Darüberhinaus lässt sich aufgrund der flächigen Schalenelemente eine sehr gute, im Vergleich zu konventionellen Diamantrahmen weit bessere Aerodynamik des Elektrofahrrads realisieren.

Der genannte Schutz gegen äußere Einflüsse beinhaltet auch einen wirkungsvollen Schutz gegen Diebstahl - nicht nur für die mit dem Rahmen verklebten Einbauteile, sondern für eine Vielzahl an Komponenten des Elektrofahrrads, welche bei konventionellen Elektrofahrrädern typischerweise von außen für jedermann zugänglich sind und beispielweise einfach abgeschraubt werden können. Der Rahmen des erfindungsgemäßen Elektrofahrrads erlaubt die Unterbringung einer Vielzahl von Komponenten innerhalb des Rahmens bzw. zwischen den Schalenelementen, sodass diese Komponenten von außen nicht mehr einfach zugänglich und abmontierbar oder zerstörbar sind. Beispielsweise können sämtliche Kabel und Leitungen innerhalb des Rahmens geführt werden.

Im Hinblick auf die Diebstahlsicherung des gesamten erfindungsgemäßen Elektrofahrrads bietet der Rahmen auch die Möglichkeit, ein entsprechendes Sicherungsmittel in den Rahmen zu integrieren, beispielsweise ein Stahlseil, das auf einem im Rahmen angeordneten, insbesondere federbelasteten, Rollenmechanismus aufgewickelt ist und zur Befestigung des Elektrofahrrads ausgezogen werden kann. Das ausgezogene Stahlseil kann sodann um einen geeigneten Ankergegenstand, beispielsweise einen fest verbauten Fahrradständer oder den Steher eines Verkehrsschilds, geschlungen werden und anschließend in ein Schloss, das ebenfalls in den Rahmen integriert ist, gesteckt und mit diesem versperrt werden. Gemäß dem oben Gesagten sind die Schalenelemente fix bzw. fest miteinander verbunden. Die Schalenelemente können hierzu stoffschlüssig miteinander verbunden, miteinander verklebt oder einstückig ausgeführt sein. Vorzugsweise können die Schalenelemente zusätzlich miteinander verschraubt und/oder vernietet sein.

Indem die mindestens eine Sattelstützenaufnahme und die Tretlageraufnahme gemeinsam als Schweißbaugruppe ausgebildet sind, ergeben sich mehrere Vorteile. Zum einen ist die Schweißbaugruppe in an sich bekannter Weise kostengünstig herstellbar und weist in sich eine hohe Festigkeit auf. Zum anderen lassen sich mit der Schweißbaugruppe entsprechend große Klebeflächen realisieren, die zu einer extrem beanspruchbaren, festen Klebeverbindung zwischen der Schweißbaugruppe und dem Rahmen bzw. den Schalenelementen beitragen, da die über die Sattelstützenaufnahme oder über das Tretlager eingebrachten Kräfte über einen großen Bereich des Rahmens abgestützt werden können.

Bei einer bevorzugten Ausführungsform des erfindungsgemäßen Elektrofahrrads ist vorgesehen, dass die Einbauteile mit den Schalenelementen verklebt, vorzugsweise zusätzlich verschraubt und/oder vernietet, sind. Hierdurch lässt sich die oben genannte feste Verbindung der Einbauteile mit dem Rahmen auf einfache und höchst stabile Weise verwirklichen.

Zur optimalen Aufbringung des Klebers können die Einbauelemente hierfür vorgesehene Klebeflächen aufweisen.

Die Einbauteile können ebenfalls aus einem kohlenstofffaserverstärkten Werkstoff oder aus einem anderen Werkstoff, beispielsweise aus einem Stahl oder einer Aluminiumlegierung bestehen. Klebstoffe zum Verkleben von Elementen aus unterschiedlichsten Materialien, wie zum Beispiel aus Verbundwerkstoffen oder Metallen, insbesondere Leichtmetallen, mit kohlenstofffaserverstärkten Werkstoffen sind an sich bekannt, etwa 2-Komponenten-Epoxidharzklebstoffe, sodass die Materialien der jeweiligen Materialkombination miteinander verklebt werden können. Derartige Verklebungen halten hohen mechanischen Belastungen stand. Auf die konkrete Verklebungsart (beispielsweise formschlüssig oder mit Spalt) kommt es dabei nicht an, und sind im Sinne der gegenständlichen Erfindung sämtliche Verklebungsarten umfasst.

Eine zusätzliche Verschraubung oder Vernietung kann zur Steigerung der Verbindungsfestigkeit vorgesehen werden, beispielsweise wenn das jeweilige Einbauteil besonders großen Schwingungsbelastungen ausgesetzt ist.

Wie bereits erwähnt, handelt es sich bei den Einbauteilen um Komponenten des Elektrofahrrads, die fix mit dem Rahmen verbunden sind und die bzw. deren Verbindungen zum Rahmen hohen mechanischen Belastungen standhalten können. Entsprechend ist es bei einer bevorzugten Ausführungsform des erfindungsgemäßen Elektrofahrrads vorgesehen, dass die Einbauteile eine Hinterradaufnahme und/oder einen Lenkkopf umfassen.

Bei einer bevorzugten Ausführungsform des erfindungsgemäßen Elektrofahrrads ist vorgesehen, dass zumindest zwei, vorzugsweise genau zwei, Sattelstützenaufnahmen vorgesehen sind, die entlang der Längsachse gesehen hintereinander angeordnet sind. Hierdurch lässt sich - neben den bekannten Verstellmöglichkeiten der Höhe eines Sattels bzw. einer Sattelstütze sowie des Sattels auf der Sattelstütze parallel zur Längsachse des Elektrofahrrads - die Geometrie zwischen Sattel, Tretlager bzw. Pedalen und Lenkkopf bzw. Lenker höchst individuell an die Bedürfnisse und Vorlieben des jeweiligen Benutzers anpassen, indem der Sattel mit seiner Sattelstütze entlang der Längsachse des Elektrofahrrads gesehen näher oder weiter weg zum Lenkkopf bzw. Tretlager positioniert werden kann (je nachdem in welche Sattelstützenaufnahme die Sattelstütze eingeschoben wird). Insbesondere kann somit auch unterschiedlichen Körpergrößen der Benutzer Rechnung getragen werden, ohne dass extra Rahmen in unterschiedlichen Größen hergestellt werden müssten, was eine enorme Kostenersparnis in der Herstellung mit sich bringt. Der Vorteil einer beträchtlichen Kostenersparnis ergibt sich jedoch nicht nur bei der Herstellung, sondern auch für den Handel, wo aufgrund der einheitlichen Rahmengröße Lagerstände beträchtlich reduziert werden können, weil nur eine Rahmengröße vorrätig gehalten werden muss.

Es sei bemerkt, dass die Sattelstützenaufnahmen zwar entlang der Längsachse gesehen hintereinander angeordnet sein müssen, dass es jedoch nicht ausgeschlossen ist, dass die Sattelstützenaufnahmen in einer Richtung normal auf die Längsachse, zumindest geringfügig, versetzt zueinander angeordnet sein können. Beispielsweise wäre es denkbar, dass aus fertigungstechnischen Gründen ein Versatz um wenige Zehntelmillimeter, beispielsweise um 0,5 mm, vorgesehen sein kann.

Grundsätzlich lässt sich die Idee von zwei oder mehr Sattelstützenaufnahmen zur Vermeidung mehrerer unterschiedlicher Rahmengrößen nicht nur beim gegenständlichen Elektrofahrrad umsetzen, sondern bei Fahrrädern im Allgemeinen, d.h. unabhängig vom Vorhandensein eines Elektromotors und unabhängig von der genauen Rahmenausführung. Insbesondere können mehrere Sattelstützenaufnahmen also auch bei Fahrrädern/Elektrofahrrädern mit Rohrrahmen bzw. mit im weitesten Sinne Diamant-artigen Rahmen vorgesehen werden. Entsprechend ist es bei einem Fahrrad oder Elektrofahrrad erfindungsgemäß vorgesehen, dass zumindest zwei, vorzugsweise genau zwei, Sattelstützenaufnahmen vorgesehen sind, die entlang einer Längsachse des Fahrrads bzw. Elektrofahrrads gesehen hintereinander angeordnet sind.

Bei einer bevorzugten Ausführungsform des erfindungsgemäßen Elektrofahrrads ist vorgesehen, dass zwischen den zumindest abschnittsweise zu beiden Seiten der Längsachse einander gegenüberliegend angeordneten Schalenelementen Fächer zur Unterbringung von Anbauelementen vorgesehen sind, wobei die Anbauelemente lösbar mit dem Rahmen verbunden sind.

Entsprechend sind die Anbauelemente - im Gegensatz zu den Einbauteilen - nicht fix bzw. fest mit dem Rahmen verbunden. Beispielsweise können Rast- und/oder Schnappverschlüsse für besonders rasch lösbare Verbindungen vorgesehen sein.

Entsprechend der Eignung der Fächer zur Unterbringung der Anbauelemente können die Fächer prinzipiell auch dazu geeignet bzw. vorgesehen sein, andere Gegenstände, die überhaupt nicht mit dem Rahmen verbunden sind, aufzunehmen, z.B. Werkzeug oder Utensilien des Benutzers. Hierfür können verschließbare, vorzugsweise versperrbare, Deckel für die Fächer vorgesehen sein, wobei die Deckel vorzugsweise verschwenkbar am Rahmen gelagert sind.

Wie bereits erwähnt, handelt es sich bei den Anbauelementen um Komponenten des Elektrofahrrads, die nicht fix mit dem Rahmen verbunden sind und die bzw. deren Verbindungen zum Rahmen vergleichsweise keine hohen mechanischen Belastungen standhalten müssen, wie z.B. um einen Kabelstrang bzw. Kabelbaum für sämtliche elektrischen/elektronischen Komponenten des Elektrofahrrads. Entsprechend ist es bei einer bevorzugten Ausführungsform des erfindungsgemäßen Elektrofahrrads vorgesehen, dass die Anbauelemente zumindest einen Scheinwerfer und/oder eine Batterie und/oder eine Kontrolleinheit und/oder einen Kabelbaum umfassen.

Im Hinblick auf die Unterbringung der Batterie erweist sich die Bauweise des Rahmens mit den flächigen Schalenelementen, die die Ausbildung von Fächern für Anbauelemente ermöglicht, als besonderer Vorteil. Im Vergleich zu Diamantrahmen kann beim erfindungsgemäßen Elektrofahrrad die Batterie in einem mittig bzw. zentral im Rahmen angeordneten Fach problemlos angeordnet werden, sodass eine optimale Schwerpunktlage resultiert - ohne Nachteile bei der mechanischen Stabilität oder den aerodynamischen Eigenschaften des Rahmens. Insbesondere lassen sich im Vergleich zum Stand der Technik auch problemlos größere Batterien bzw. Batterien mit weit größerer Kapazität in den Fächern unterbringen. Konkret können heutzutage bei Elektrofahrrädern mit Diamantrahmen Batterien mit typischerweise maximal 700 Wh verbaut werden. Der Rahmen des erfindungsgemäßen Elektrofahrrads bietet (mit einem entsprechenden Fach) problemlos Platz für Batterien mit 1,5 kWh oder mehr.

Bei einer bevorzugten Ausführungsform des erfindungsgemäßen Elektrofahrrads ist vorgesehen, dass im Bereich einer als Einbauteil ausgeführten Hinterradaufnahme Fußrasten vorgesehen sind, die in die Schalenelemente oder in die Hinterradaufnahme integriert sind, wobei die Fußrasten vorzugsweise als Trittbretter ausgebildet sind.

Solche Fußrasten können ggf. nicht nur vom Fahrer benutzt werden, z.B. um bei Fahrt mit dem Elektromotor eine bequemere Sitzposition zu ermöglichen, sondern sind insbesondere von Vorteil, wenn außer dem Fahrer noch eine zweite Person transportiert werden soll. In letzterem Fall kann der Fahrer seine Füße auf den Pedalen positionieren, wohingegen die zweite Person ihre Füße auf den Fußrasten anordnet.

Die Ausführung der Fußrasten als Trittbretter bietet einen besonders hohen Komfort - für den Fahrer oder die zweite Person.

Die Ausbildung der Hinterradaufnahme als Einbauteil garantiert deren mechanische Belastbarkeit, wobei der Rahmen naturgemäß eine hinreichend große mechanische Stabilität in diesem Bereich aufweist. Die Anordnung der Fußrasten in diesem Bereich erlaubt einerseits eine gute Ergonomie und andererseits die Ausnutzung der hohen mechanischen Stabilität des Rahmens in diesem Bereich zur zumindest teilweisen Abstützung des Gewichts des Fahrers bzw. der zweiten Person.

Zur Integration der Fußrasten in die Hinterradaufnahme können die Fußrasten insbesondere einstückig mit der Hinterradaufnahme ausgeführt bzw. an die Hinterradaufnahme angeformt sein. Typischerweise sind die Fußrasten wie die Hinterradaufnahme aus Aluminium bzw. einer Aluminiumlegierung gefertigt. Aufgrund der hohen mechanischen Belastbarkeit der Hinterradaufnahme sind entsprechend auch die in die Hinterradaufnahme integrierten Fußrasten mechanisch äußerst stabil.

Zur Integration der Fußrasten in die Schalenelemente können die Fußrasten insbesondere einstückig mit den Schalenelementen ausgeführt bzw. an die Schalenelemente angeformt sein.

Alternativ oder zusätzlich zu einer stoffschlüssigen Verbindung der Fußrasten mit der Hinterradaufnahme oder den Schalenelementen wäre aber natürlich auch eine Verbindung z.B. über Verschraubung oder Vernietung oder Verklebung möglich.

Es sei bemerkt, dass die Fußrasten, insbesondere wenn sie als Trittbretter ausgeführt sind, sich ideal zur Anordnung oder Integration von Rücklichtern und/oder Blinkern und/oder Bremslichtern eignen. Zum einen bieten die Fußrasten ausreichend Platz zur Unterbringung besagter Lichter. Zum anderen sind besagte Lichter selbst dann gut erkennbar, wenn eine Person ihre Füße auf den Fußrasten abstellt. D.h. es kann entsprechend vorgesehen sein, dass Rücklichter und/oder Blinker und/oder Bremslichter an den Fußrasten angeordnet oder in die Fußrasten integriert sind.

Sowohl beim erfindungsgemäßen Elektrofahrrad bzw. Fahrrad mit dem Schalenelemente aufweisenden Rahmen als auch beim oben genannten allgemeinen Fall (unabhängig vom Vorhandensein eines Elektromotors und unabhängig von der genauen Rahmenausführung) gilt, dass die mindestens eine andere, nicht verwendete Sattelstützenaufnahme prinzipiell anderweitig verwendet werden kann, z.B. zur Halterung anderer Gegenstände bzw. einer Gepäckhalterung. Denkbar wäre es auch, zumindest zwei der Sattelstützenaufnahmen zur Befestigung einer Sitzbank für zwei Personen zu verwenden, wobei die Sitzbank zur Verbindung mit dem jeweiligen Rahmen zwei Rohre aufweist, die in die zumindest zwei Sattelstützenaufnahmen eingeschoben und dort fixiert werden können.

Entsprechend ist es bei einer bevorzugten Ausführungsform des erfindungsgemäßen Elektrofahrrads bzw. Fahrrads vorgesehen, dass eine Sitzbank, insbesondere für zwei Personen, vorgesehen ist, wobei die Sitzbank zur Verbindung mit dem Rahmen zumindest zwei Verbindungsrohre aufweist, die in zumindest zwei als Einbauteile ausgeführten Sattelstützenaufnahmen anordenbar und lösbar befestigbar sind. Die Sitzbank bietet dem Fahrer eine besonders komfortable Sitzgelegenheit, wobei die Sitzbank auch speziell für einen Fahrer ausgelegt sein kann.

Die zumindest zwei Verbindungsrohre ermöglichen eine hinreichend stabile Befestigung der Sitzbank, selbst wenn beim Betrieb des Elektrofahrrads bzw. Fahrrads zwei Personen auf der Sitzbank sitzen.

Zur Erhöhung der Stabilität der Befestigung der Sitzbank - insbesondere im Hinblick auf einen Zweipersonenbetrieb - kann vorgesehen sein, dass zumindest eines der Verbindungsrohre, insbesondere ein hinteres Verbindungsrohr, ein Außengewinde aufweist, auf welchem Außengewinde eine Mutter angeordnet ist, die einen verstellbaren Anschlag für die zugehörige Sattelstützenaufnahme ausbildet.

Als hinteres Verbindungsrohr ist jenes der Verbindungsrohre zu verstehen, das am nächsten zur Hinterradaufnahme bzw. zum Hinterrad angeordnet ist, wenn die Sitzbank montiert ist.

Bei der Mutter muss es sich selbstverständlich nicht um eine klassische Sechskantmutter handeln, sondern kann die Mutter auch anders so geometrisch gestaltet sein, dass der Benutzer die Mutter auf dem Außengewinde problemlos verdrehen bzw. verstellen kann.

Der durch die Mutter ausgebildete Anschlag ermöglicht einen Formschluss zur zugehörigen Sattelstütze, sodass auch sehr hohe Gewichte, die sich aufgrund der bei der Sitzbank vorherrschenden Hebelverhältnisse - und insbesondere im Zweipersonenbetrieb aufgrund der erhöhten Zuladung - ergeben, problemlos abgestützt werden können.

Die Sitzbank lässt sich in den Sattelstützenaufnahmen grundsätzlich wie ein gewöhnlicher Sattel in der Höhe verstellen. Dies ermöglicht eine optimale Einstellung der Sitzbank für den Fahrer, sodass dieser die Pedale problemlos betätigen kann. Insbesondere können die Verbindungsrohre mittels Schnellverschlüsse in den Sattelstützenaufnahmen fixiert werden. Dabei reicht es für eine solide Befestigung der Sitzbank aus, wenn nur bei dem/den Verbindungsrohr/en ohne Außengewinde und Mutter eine Fixierung erfolgt und beim mindestens einen Verbindungsrohr mit Außengewinde lediglich der oben genannte Formschluss durch entsprechende Anordnung der Mutter hergestellt wird. Klarerweise sollte jedenfalls zumindest ein Verbindungsrohr fixiert werden.

Bei einer bevorzugten Ausführungsform des erfindungsgemäßen Elektrofahrrads ist vorgesehen, dass eine als Einbauteil ausgeführte Aufnahme für einen Gepäckträger vorgesehen ist. Die Vorsehung einer separaten Aufnahme für den Gepäckträger hat zum einen den Vorteil, dass die Aufnahme optimal angeordnet und für im Hinblick auf die erforderliche mechanische Stabilität hinreichend ausgelegt werden kann. Zum anderen kann somit der Gepäckträger selbst dann montiert werden, wenn die Sattelstützenaufnahmen, insbesondere durch die oben erwähnte Sitzbank bzw. durch deren Verbindungsrohre, belegt sind.

Die Aufnahme kann z.B. eine Adapterplatte umfassen, an welcher bekannte Gepäckträger montiert werden können.

Auf dem Gepäckträger kann Gepäck direkt befestigt, insbesondere verzurrt, werden. Alternativ oder zusätzlich kann ein separates, an sich bekanntes Behältnis zur Aufnahme von Gepäck, z.B. ein sog. Topcase, montiert werden.

Insbesondere im Hinblick auf die Dauerhaftigkeit der mechanischen Stabilität der Befestigung der Einbauteile in den Schalenelementen ist die konkrete Wahl der Materialien der Schalenelemente einerseits und der Einbauteile andererseits von Bedeutung. Konkret stellt sich beispielsweise die Kombination von kohlenstofffaserverstärkten Kunststoffen für die Schalenelemente und Aluminium bzw. Aluminiumlegierungen für die Einbauteile als nicht optimal heraus, da es aufgrund der elektrochemischen Eigenschaften der Materialien zu einer erhöhten elektrochemischen Korrosion kommt, was wiederum die Langzeitstabilität beeinträchtigen kann. Die Verwendung von Stahl statt Aluminium verbessert in diesem Fall die Situation zwar etwas, ist aber im Hinblick auf elektrochemische Korrosion immer noch nicht als optimal anzusehen. Es zeigt sich jedoch, dass die Verwendung von austenitischem Stahl das Problem der elektrochemischen Korrosion weitestgehend beseitigt. Bei einer bevorzugten Ausführungsform des erfindungsgemäßen Elektrofahrrads ist es daher vorgesehen, dass die Schweißbaugruppe aus austenitischem Stahl gefertigt ist.

Austenitische Stähle sind in der Regel rostfrei und gut zu verschweißen.

Im Hinblick auf eine optimale Wirtschaftlichkeit ist z.B. der austenitische Stahl Nr. 1.4301 zu nennen, der preislich günstig ist.

Bei einer bevorzugten Ausführungsform des erfindungsgemäßen Elektrofahrrads ist vorgesehen, dass die Schalenelemente aus kohlenstofffaserverstärktem Kunststoff gefertigt sind, wobei der Kunststoff ein Duromer ist. Zum einen erweisen sich Duromere, die auch als Duroplasten bezeichnet werden, im Hinblick auf ihre guten mechanischen Eigenschaften als günstig. Zum anderen ist hiermit eine gute Herstellbarkeit von kohlenstofffaserverstärkten Kunststoffen gegeben. Beispielsweise kann Epoxidharz als Reaktionsharz fungieren, mit dem die Fasern vorimprägniert werden, um sog. Prepregs zu erzeugen. Derlei kohlenstofffaserverstärkte Kunststoffe werden manchmal auch mit "EP-CFK" bezeichnet.

Ganz allgemein können die Prepregs bequem zu Laminaten in vielfältigsten Formen - vgl. die Schalenelemente des erfindungsgemäßen Elektrofahrrads - verarbeitet werden, die anschließend gehärtet werden.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Seitenansicht einer Ausführungsform des erfindungsgemäßen Elektrofahrrads
- Fig. 2: das Elektrofahrrad aus Fig. 1 in einer schematischen Aufsicht von oben
- Fig. 3: das Elektrofahrrad aus Fig. 1 in einer schematischen Frontansicht
- Fig. 4: das Elektrofahrrad aus Fig. 1 in einer schematischen Schnittansicht gemäß der Schnittfläche IV in Fig. 1, wobei die Schnittebene eine Längsachse des Elektrofahrrads umfasst
- Fig. 5: das Elektrofahrrad aus Fig. 1 in einer schematischen Schnittansicht gemäß der Schnittlinie V-V in Fig. 1, wobei die Schnittebene normal auf die Längsachse des Elektrofahrrads steht
- Fig. 6: eine schematische Seitenansicht einer weiteren Ausführungsform des erfindungsgemäßen Elektrofahrrads mit einer Sitzbank für zwei Personen
- Fig. 7: eine schematische Seitenansicht einer weiteren Ausführungsform des erfindungsgemäßen Elektrofahrrads mit einem Gepäckträger und einem daran montierten Behälter

### WEGE ZUR AUSFÜHRUNG DER ERFINDUNG

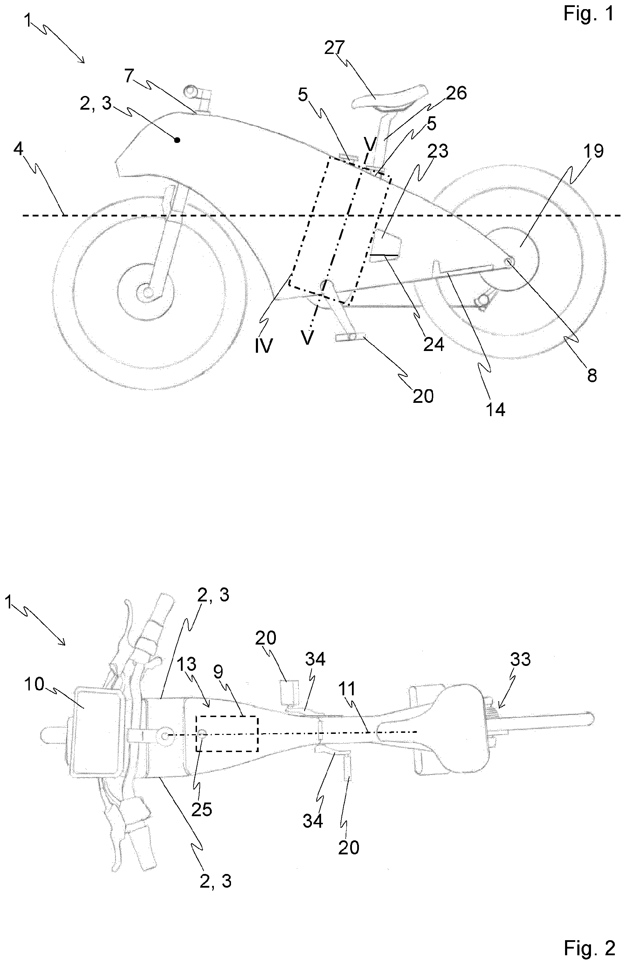

Fig. 1 zeigt eine schematische Seitenansicht eines erfindungsgemäßen Elektrofahrrads 1. Das Elektrofahrrad 1 weist einen Rahmen 2 aus einem kohlenstofffaserverstärktem Werkstoff auf, wobei es sich in den dargestellten Ausführungsbeispielen beim kohlenstofffaserverstärkten Werkstoff um einen kohlenstofffaserverstärkten Kunststoff handelt. Dabei kann der Kunststoff insbesondere ein Duromer sein. Der Rahmen 2 ist dabei in der Art eines Monocoques gehalten und weist in den dargestellten Ausführungsbeispielen zwei miteinander verbundene, flächige Schalenelemente 3 auf, die sich entlang einer Längsachse 4 des Elektrofahrrads 1 erstrecken und zumindest abschnittsweise zu beiden Seiten der Längsachse 4 einander gegenüberliegend angeordnet sind. Diverse Fahrradkomponenten sind in Form von Einbauteilen zumindest abschnittsweise zwischen den Schalenelementen 3 angeordnet und mit diesen fest verbunden.

Die Verbindung der beiden Schalenelemente 3 umfasst vorzugsweise eine Verklebung. Die Einbauteile sind mit den Schalenelementen 3 jedenfalls verklebt und ggf. zusätzlich verschraubt und/oder vernietet.

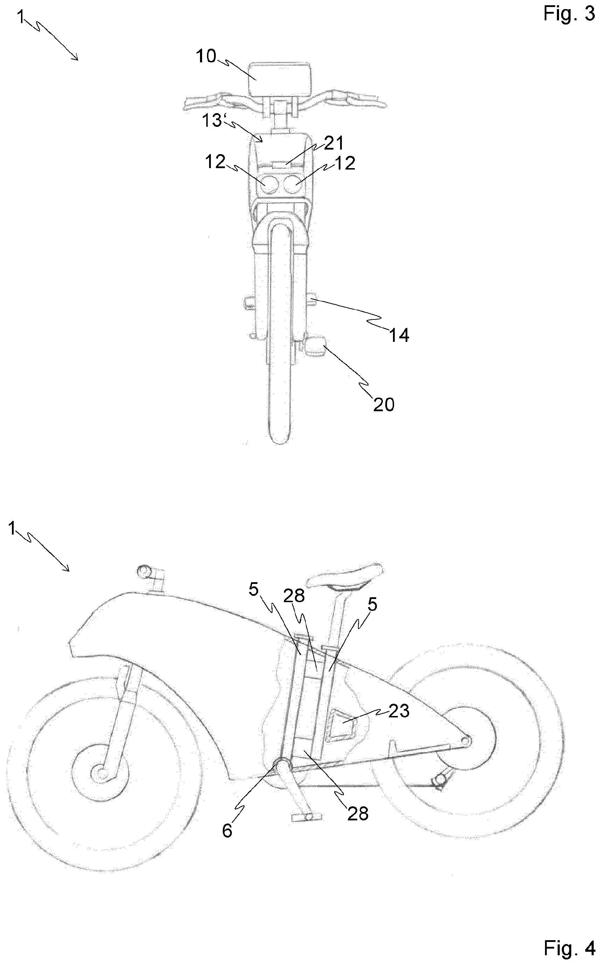

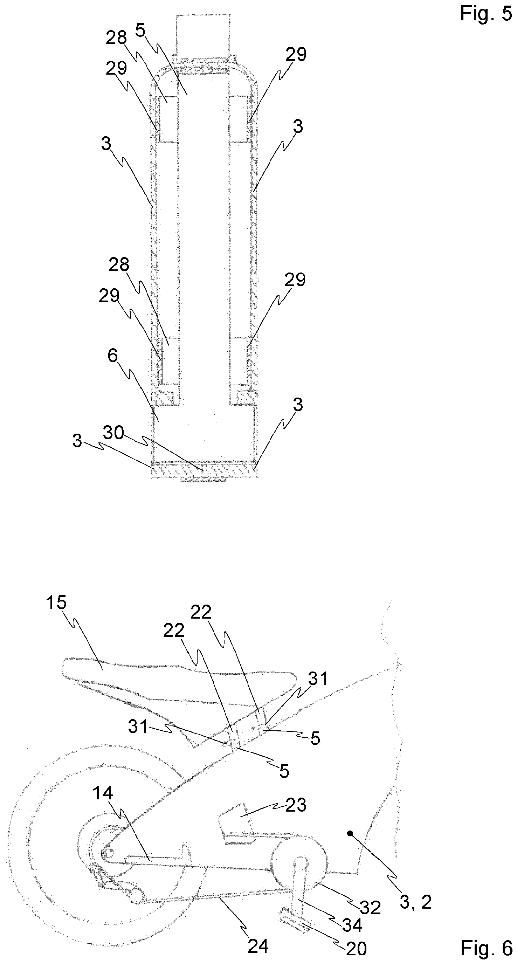

In den dargestellten Ausführungsbeispielen umfassen die Einbauteile zwei Sattelstützenaufnahmen 5, die entlang der Längsachse gesehen hintereinander angeordnet sind. Entsprechend kann eine Sattelstütze 26 mit einem Sattel 27 entlang der Längsachse 4 näher zu einem Lenkkopf 7 oder zu einem Tretlager 6, vgl. Fig. 4 und Fig. 5, oder weiter von diesen weg positioniert werden, sodass insbesondere unterschiedlichsten Benutzergrößen Rechnung getragen werden kann, ohne dass dafür Rahmen 2 in unterschiedlichen Größen hergestellt werden müssten. Zur Fixierung der Sattelstütze 26 in der jeweiligen Sattelstützenaufnahme 5 sind an sich bekannte Schnellverschlüsse 31 vorgesehen.

Der Lenkkopf 7 sowie das Tretlager 6 sind ebenfalls als Einbauteile ausgebildet. Weiters umfassen die Einbauteile in den dargestellten Ausführungsbeispielen eine Hinterradaufnahme 8.

Wie aus Fig. 4 und Fig. 5 hervorgeht, sind die Sattelstützenaufnahmen 5 und die Tretlageraufnahme 6 integral, insbesondere gemeinsam als Schweißbaugruppe, ausgebildet, wobei die Schweißbaugruppe insbesondere aus austenitischem Stahl gefertigt sein kann. Dabei sind Verbindungselemente 28 vorgesehen, die die Sattelstützenaufnahmen 5 miteinander verbinden. Dies erlaubt nicht nur eine kostengünstige und gleichzeitig besonders stabile Fertigung, sondern stellt besonders große Flächen für Verklebungen 29 mit den Schalenelementen 3 zur Verfügung, vgl. Fig. 5. Wie aus Fig. 5 ebenfalls hervorgeht, ist zur Befestigung des Tretlagers 6 an den Schalenelementen 3 bzw. am Rahmen 2 zusätzlich eine Verschraubung 30 vorgesehen.

Die Anordnung der beiden Schalenelemente 3 ermöglicht weiters, dass zwischen den Schalenelementen 3 Fächer 13 ausgebildet sind, die zur Unterbringung von Anbauelementen vorgesehen sind, wobei die Anbauelemente lösbar mit dem Rahmen 2 verbunden sind. In den dargestellten Ausführungsbeispielen umfassen die Anbauelemente eine Batterie 9, die in Fig. 2 durch die strichlierte Linie angedeutet ist. Das Fach 13 für die Batterie 9 bzw. ein Deckel des Fachs 13 ist mittels eines Schlosses 25 versperrbar, wobei der Deckel vorzugsweise verschwenkbar am Rahmen 2 montiert ist. Die Batterie 9 ist im Fach 13 im Hinblick auf den Schwerpunkt optimal zentral im Elektrofahrrad 1 angebracht, wobei beispielsweise ein Schnapp- bzw. Rastverschluss im Fach 13 und auf der Batterie 9 vorgesehen ist, um die Batterie 9 zumindest indirekt mit dem Rahmen 2 lösbar zu verbinden. Die Batterie 9 dient zur Stromversorgung der elektrisch betriebenen Komponenten des Elektrofahrrads 1, insbesondere eines am Hinterrad montierten Nabenmotors 19, der nicht nur eine sportliche Fahrweise, sondern auch eine reichweitenerhöhende Rekuperation ermöglicht.

Weiters können Fächer 13 zur Unterbringung von Utensilien des Benutzers vorgesehen sein. In Fig. 3 ist in diesem Zusammenhang ein Fach 13' an der Front des Elektrofahrrads 1 erkennbar, dessen Deckel mit einem Druckverschluss 21 verschlossen ist und welches sich zur Unterbringung von z.B. Werkzeug eignet. Der Deckel ist vorzugsweise verschwenkbar am Rahmen 2 montiert.

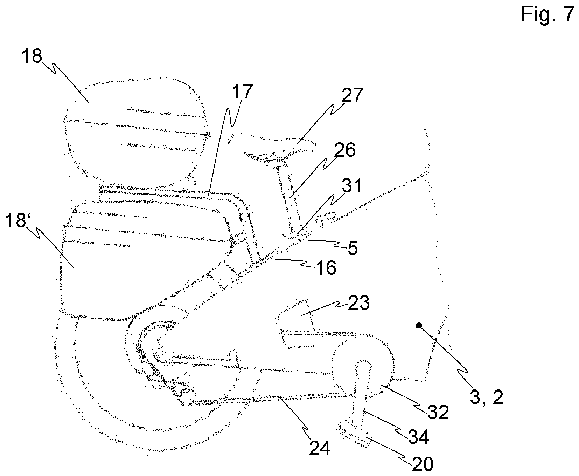

Zusätzlich zum Nabenmotor 19 ist der Antrieb des Hinterrads über eine Kette 24 vorgesehen, die über an Kurbelarmen 34 gelagerte Pedale 20 durch den Benutzer wie bei einem gewöhnlichen Fahrrad betätigt werden kann. Zur Durchführung der Kette 24 von einem vorderen Kettenblatt 32 (vgl. Fig. 6 oder Fig. 7) im Bereich des Tretlagers 6 zu hinteren Kettenblättern 33 (vgl. Fig. 2), die auf einer Hinterradnabe sitzen bzw. mit dem Nabenmotor 19 verbunden sind, ist eine Ausnehmung 23 im Rahmen 2 bzw. in den Schalenelemente 3 vorgesehen.

Zur Verbindung der elektrisch betriebenen Komponenten des Elektrofahrrads mit der Batterie 9 bzw. einer Kontrolleinheit 10 (in Fig. 1 und Fig. 4 nicht dargestellt), die die elektrisch betriebenen Komponenten kontrolliert bzw. ansteuert, dient ein Kabelbaum 11, der ebenfalls als Anbauelement ausgeführt und in Fig. 2 durch die strichpunktierte Linie angedeutet ist. Die Kontrolleinheit 10 umfasst bei den dargestellten Ausführungsbeispielen ein Display, um diverse Informationen für den Fahrer darzustellen, z.B. Informationen über den Zustand der elektrisch betriebenen Komponenten des Elektrofahrrads 1, über den Ladezustand der Batterie 9, aber auch über die aktuelle Geschwindigkeit, die zurückgelegten Kilometer, die verbleibende Reichweite und dergleichen.

Weiters sind in den dargestellten Ausführungsbeispielen Scheinwerfer 12 vorgesehen, vgl. Fig. 3, die ebenfalls als Anbauelemente ausgeführt sind, über die Batterie 9 mit Strom versorgt werden und über die Kontrolleinheit 10 ansteuerbar sind.

Fig. 6 zeigt eine Ausführungsform des Elektrofahrrads 1, bei der eine Sitzbank 15 für zwei Personen vorgesehen ist, wobei die Sitzbank 15 zur Verbindung mit dem Rahmen 2 zwei Sitzbankverbindungsrohre 22 aufweist, die in die zwei Sattelstützenaufnahmen 5 eingeführt und mittels der Schnellverschlüsse 31 lösbar befestigt sind.

Beim Transport von zwei Personen kann der Fahrer seine Füße auf den Pedalen 20 anordnen, wohingegen die zweite Person ihre Füße auf Fußrasten 14 positionieren kann. Besagte Fußrasten 14 sind im Bereich der Hinterradaufnahme 8 angeordnet und in die Schalenelemente 3 integriert. In den dargestellten Ausführungsbeispielen sind die Fußrasten 14 als Trittbretter ausgebildet, die besonders viel Platz zur Positionierung der Füße bieten und somit den Komfort erhöhen. Dabei sind die Fußrasten 14 einstückig mit den Schalenelementen 3 ausgeführt.

Fig. 7 zeigt eine Ausführungsform des Elektrofahrrads 1, bei der eine als Einbauteil ausgeführte Gepäckträgeraufnahme 16 für einen Gepäckträger 17 vorgesehen ist. Im dargestellten Ausführungsbeispiel ist die Gepäckträgeraufnahme 16 im Stile einer Adapterplatte gehalten, die mit den Schalenelementen 3 verklebt ist und Ausnehmungen aufweist, in welchen Ausnehmungen Rohre des Gepäckträgers 17 angeordnet und fixiert sind. Die Fixierung kann dabei in an sich bekannter Weise erfolgen, beispielsweise mit Schnellverschlüssen (nicht dargestellt). Am Gepäckträger 17 sind im dargestellten Ausführungsbeispiel wiederum Behältnisse 18, 18' in an sich bekannter Weise (beispielsweise durch Verschraubung oder durch Rastverschlüsse) montiert. Das Behältnis 18 ist dabei im Stile eines sog. Topcase gehalten. Zwei Behältnisse 18' sind zu beiden Seiten im Stile von Seitenkoffern am Gepäckträger 17 befestigt.

### BEZUGSZEICHENLISTE

- 1: Elektrofahrrad
- 2: Rahmen
- 3: Schalenelement
- 4: Längsachse
- 5: Sattelstützenaufnahme
- 6: Tretlageraufnahme
- 7: Lenkkopf
- 8: Hinterradaufnahme
- 9: Batterie
- 10: Kontrolleinheit
- 11: Kabelbaum
- 12: Scheinwerfer
- 13, 13': Fach
- 14: Fußraste
- 15: Sitzbank
- 16: Gepäckträgeraufnahme
- 17: Gepäckträger
- 18, 18': Behältnis
- 19: Nabenmotor
- 20: Pedal
- 21: Druckverschluss
- 22: Sitzbankverbindungsrohr
- 23: Ausnehmung
- 24: Kette
- 25: Schloss
- 26: Sattelstütze
- 27: Sattel
- 28: Verbindungselement
- 29: Verklebung
- 30: Verschraubung
- 31: Schnellverschluss
- 32: Vorderes Kettenblatt
- 33: Hinteres Kettenblatt
- 34: Kurbelarm

## Patentansprüche

1. Elektrofahrrad (1) mit einem Rahmen (2) aus einem kohlenstofffaserverstärktem Werkstoff, insbesondere kohlenstofffaserverstärktem Kunststoff, wobei der Rahmen (2) zumindest zwei, vorzugsweise genau zwei, miteinander verbundene Schalenelemente (3) umfasst, die sich entlang einer Längsachse (4) des Elektrofahrrads (1) erstrecken und zumindest abschnittsweise zu beiden Seiten der Längsachse (4) einander gegenüberliegend angeordnet sind, wobei Einbauteile (5, 6, 7, 8) zumindest abschnittsweise zwischen den Schalenelementen (3) angeordnet und mit diesen verbunden sind und wobei die Einbauteile mindestens eine Sattelstützenaufnahme (5) und eine Tretlageraufnahme (6) umfassen, **dadurch gekennzeichnet, dass** die mindestens eine Sattelstützenaufnahme (5) und die Tretlageraufnahme (6) gemeinsam als Schweißbaugruppe ausgebildet sind.

2. Elektrofahrrad (1) nach Anspruch 1, **dadurch gekennzeichnet, dass** die Einbauteile mit den Schalenelementen (3) verklebt, vorzugsweise zusätzlich verschraubt und/oder vernietet, sind.

3. Elektrofahrrad (1) nach einem der Ansprüche 1 bis 2, **dadurch gekennzeichnet, dass** die Einbauteile eine Hinterradaufnahme (8) und/oder einen Lenkkopf (7) umfassen.

4. Elektrofahrrad (1) nach Anspruch 3, **dadurch gekennzeichnet, dass** zumindest zwei, vorzugsweise genau zwei, Sattelstützenaufnahmen (5) vorgesehen sind, die entlang der Längsachse (4) gesehen hintereinander angeordnet sind.

5. Elektrofahrrad (1) nach einem der Ansprüche 1 bis 4, **dadurch gekennzeichnet, dass** die Schweißbaugruppe aus austenitischem Stahl gefertigt ist.

6. Elektrofahrrad (1) nach einem der Ansprüche 1 bis 5 **dadurch gekennzeichnet, dass** zwischen den zumindest abschnittsweise zu beiden Seiten der Längsachse (4) einander gegenüberliegend angeordneten Schalenelementen (3) Fächer (13, 13') zur Unterbringung von Anbauelementen (9, 10, 11, 12) vorgesehen sind, wobei die Anbauelemente (9, 10, 11, 12) lösbar mit dem Rahmen (2) verbunden sind.

7. Elektrofahrrad (1) nach Anspruch 6, **dadurch gekennzeichnet, dass** die Anbauelemente zumindest einen Scheinwerfer (12) und/oder eine Batterie (9) und/oder eine Kontrolleinheit (10) und/oder einen Kabelbaum (11) umfassen.

8. Elektrofahrrad (1) nach einem der Ansprüche 1 bis 7, **dadurch gekennzeichnet, dass** im Bereich einer als Einbauteil ausgeführten Hinterradaufnahme (8) Fußrasten (14) vorgesehen sind, die in die Schalenelemente (3) oder in die Hinterradaufnahme (8) integriert sind, wobei die Fußrasten (14) vorzugsweise als Trittbretter ausgebildet sind.

9. Elektrofahrrad (1) nach einem der Ansprüche 1 bis 8, **dadurch gekennzeichnet, dass** eine Sitzbank (15), insbesondere für zwei Personen, vorgesehen ist, wobei die Sitzbank (15) zur Verbindung mit dem Rahmen (2) zumindest zwei Verbindungsrohre (22) aufweist, die in zumindest zwei als Einbauteile ausgeführten Sattelstützenaufnahmen (5) anordenbar und lösbar befestigbar sind.

10. Elektrofahrrad (1) nach einem der Ansprüche 1 bis 9, **dadurch gekennzeichnet, dass** eine als Einbauteil ausgeführte Aufnahme (16) für einen Gepäckträger (17) vorgesehen ist.

11. Elektrofahrrad (1) nach einem der Ansprüche 1 bis 10, **dadurch gekennzeichnet, dass** die Schalenelemente (3) aus kohlenstofffaserverstärktem Kunststoff gefertigt sind, wobei der Kunststoff ein Duromer ist.
